# EUROPEAN PATENT SPECIFICATION

(11) **EP 3 803 244 B1**
(45) Date of publication and mention of the grant of the patent: **23.04.2025**
(21) Application number: 19731486.7
(22) Date of filing: 30.05.2019
(51) Int. Cl.: F28D 1/03, F28D 1/04, F28D 1/047, F28D 9/00, C08F 6/00, F28D 7/00, F28F 1/32, F28F 3/08, F28F 13/08

(54) **APPARATUS AND METHOD OF USE THEREOF**
VORRICHTUNG UND VERFAHREN ZUR VERWENDUNG DAVON
APPAREIL ET SON PROCÉDÉ D'UTILISATION

(30) Priority: 31.05.2018 US 201862678597 P
(43) Date of publication of application: 14.04.2021
(73) Proprietor: Dow Global Technologies LLC, Midland, MI 48674 (US)
(72) Inventor: POLLARD, Maria, Lake Jackson, Texas 77566 (US); EWART, Sean W., Lake Jackson, Texas 77566 (US); DAVIS, Mark B., Freeport, Texas 77541 (US); BLANCHARD, Bradley K., Plaquemine, Louisiana 70765 (US)
(74) Representative: Boult Wade Tennant LLP
(86) International application number: PCT/US2019/034607
(87) International publication number: WO 2019/232183

(56) References cited:
- EP-A2- 0 226 204
- WO-A1-95/24252
- US-A1- 2010 203 006

## Description

### BACKGROUND

This disclosure relates to an apparatus and a process for heating or cooling high viscosity solutions that contain polymers.

US-A-20101203006 relates to an apparatus or process for devolatilization of flowable materials (such as molten polymers with entrained or dissolved solvent or unreacted monomers or comonomers) using a plate heater having heating channels, the design or operation of which heating channels maintains the flowable material above its bubble point pressure during passage through a larger first zone and then induces flashing in, or downstream of, a smaller second zone of the heating channel.

WO-A-95/24252 relates to a polymer devolatilization apparatus comprising a flat plate heater comprising a polymer solution supply means, and a liquid/vapor collection and separation means, said flat plate heater further comprising a multiplicity of flat plates defining a plurality of channels, each channel having a substantially uniform height, but varying width over the total channel length, each channel comprising three zones: a first zone, having a beginning and a terminus, said beginning in operative communication with the polymer solution supply means, characterized by decreasing width as a function of distance from its beginning, a second zone having a beginning at the terminus of the first zone and a terminus, characterized by at least one occurrence of a restrictive cross-sectional area, and a third zone having a beginning at the terminus of the second zone and terminating at a liquid/vapor collection and separation region operating at reduced pressure, said third zone characterized by increasing width as a function of distance from its beginning, and provided further that the ratio of maximum width of the third zone to the maximum width of the second zone is from 2:1 to 20:1.

EP-A-226,204 relates to a method and apparatus for devolatilizing high viscosity polymer solutions are provided wherein high viscosity polymer solutions are heated along a short zone of indirect heat exchange. The residence time within the zone of indirect heat exchange ranges from approximately 5 seconds to 120 seconds.

Polymers and polymeric products (hereinafter referred to as "polymers") are often manufactured in the presence of solvents and other volatile components (e.g., monomers and by-products) (solvents and volatile components will hereinafter be referred to as "volatiles"). The combination of a polymer with a solubilizing solvent is referred to as a polymer solution. During the production of the polymer, heat may need to be added or removed from the polymer solution.

Solution polymerization may be accomplished in adiabatic or non-adiabatic reactors, where part of the heat of reaction is removed through the use of heat exchangers. One advantage of the latter is that the production rate can be increased when compared with processes where no heat exchanger is present. After the desired polymer is obtained, it is desirable to remove the volatiles from the polymer. The removal of volatiles from the polymer is referred to as "devolatilization". The separation of the volatiles from the polymer solution is generally accomplished by evaporation, where the polymer solution is heated to a temperature higher than the boiling point of the volatiles while simultaneously (concurrent with the heating) or sequentially (after the heating) extracting evolved volatiles from the polymer solution.

Heat exchangers used for this purpose are shell-and-tube heat exchangers, which comprise a plurality of tubes in a vessel where the heat is removed by circulating cooling water on the shell side of the heat exchangers. One of the potential issues with these exchangers is the high pressure drop used for the amount of heat that needs to be removed from the process. It is desirable to remove the heat of reaction while keeping the pressure drop to a minimum.

In addition, shell-and-tube heat exchangers are incapable of handing polymer solutions that have high viscosities of 10,000 to 1,000,000 centipoise due to high pressure drops incurred and reduced heat transfer rates. It is therefore desirable to have a heat exchanger that can handle the aforementioned high viscosity polymer solutions at temperatures of greater than 150°C, while keeping the polymer and the solvent in a single phase.

### SUMMARY

Disclosed herein is an apparatus comprising a shell; the shell having an inlet port for introducing a polymer solution into the shell and an outlet port for removing the polymer solution from the shell; wherein the polymer solution comprises a polymer and a solvent that is operative to dissolve the polymer; a plurality of plates in the shell; where the plurality of plates is stacked one atop the other to define a central passage that is in fluid communication with the inlet port of the shell; where the plurality of plates further defines a plurality of conduits, each conduit extending radially outwards from the central passage, where the plurality of conduits is in fluid communication with the central passage; and where the apparatus is operated at a pressure and a temperature effective to maintain the polymer solution in a single phase during its travel through the apparatus from the inlet port of the shell to an outlet port of the shell.

Disclosed herein too is a method comprising discharging a polymer solution in a single phase to an apparatus comprising a shell; the shell having an inlet port for introducing a polymer solution into the shell and an outlet port for removing the polymer solution from the shell; a plurality of plates disposed in the shell; where the plurality of plates is stacked one atop the other to define a central passage that is in fluid communication with the inlet port to the shell; where the plurality of plates further defines a plurality of conduits, each conduit extending radially outwards from the central passage, where the plurality of conduits is in fluid communication with the central passage; operating the apparatus at a pressure and a temperature effective to maintain the polymer solution in a single phase during its travel through the apparatus from the inlet port to the outlet port of the shell; and removing from the outlet port of the apparatus the polymer solution in the single phase; the polymer solution being at a higher temperature than a temperature at the inlet port, the polymer solution being at a lower temperature than the temperature at the inlet port, or the polymer solution remaining at the same temperature at the inlet and outlet port but with heat of reaction being removed from the polymer solution.

### BRIEF DESCRIPTION OF THE FIGURES

FIG. 1A is a schematic depiction of an exemplary apparatus;
FIG. 1B depicts a side view and a top view of a supporting tube;
FIG. 2 is another schematic depiction of an exemplary apparatus;
FIG. 3A is an depiction of a top view of an exemplary plate in the apparatus;
FIG. 3B is an depiction of a top view of a plate not covered by the present invention as defined in the claims;
FIG. 4A is an expanded schematic top view of the section XYY'X' seen in the FIG. 3A;
FIG. 4B is another expanded schematic top view of a section of the plate from the FIG. 3B;
FIG. 5 is an expanded schematic side view of the section AA' seen in the FIG. 4A;
FIG. 6 is a schematic depiction of an exemplary devolatilization apparatus that includes top-down (inside-to-outside) flow of the polymer solution; and
FIG. 7 is a schematic depiction of an exemplary devolatilization apparatus that includes bottom-to-top (outside-to-inside) flow of the polymer solution.

### DETAILED DESCRIPTION

Disclosed herein is an apparatus and a process for increasing or reducing the temperature or removing the heat of reaction of high viscosity solutions that comprise polymers. The apparatus is effectively designed to maintain the polymer solution in a single phase during its transport through the apparatus while raising or lowering its temperature by an amount of greater than 10°C from its initial temperature (e.g., the temperature at the inlet port of the apparatus), or alternatively, maintaining the polymer at a constant temperature (in a reactive polymer solution system), while simultaneously decreasing its pressure by as small an amount as possible.

In short, it facilitates increasing, reducing or maintaining constant the temperature of the polymer solution while simultaneously reducing the pressure of the polymer solution by as small an amount as possible. The disclosed apparatus can be used to heat, cool, or to maintain at a constant temperature (from inlet port to outlet port) a polymer solution that is transported through the apparatus, while facilitating a change in the pressure of the polymer solution.

In an embodiment, the apparatus is a shell and plate heat exchanger. In an embodiment, the apparatus comprises a shell within which is disposed a plurality of plates stacked one over the other, where a pair of neighboring plates (along with the associated walls) when in contact with one another form a plurality of radially disposed conduits that facilitate transporting the polymer solution from the center of the shell to the outside of the shell or alternatively from the outside to the center of the shell while raising its temperature and simultaneously reducing its pressure. The apparatus may alternatively be described as a flat plate heat exchanger where the plates are suspended in a cylindrical shell.

The apparatus therefore comprises a pressure controllable system where the polymer solution is increased in temperature from 120°C to 300°C, preferably 180°C to 260°C; the pressure is decreased by less than 70 kilogram force per square centimeter (kgf/cm²), preferably by less than 35 kgf/cm² from the inlet pressure all while maintaining the polymer in a single phase with the solvent. In an embodiment, the inlet pressure is 35 to 250 kgf/cm², while the outlet pressure is 20 to 200 kgf/cm². The single phase is a liquid phase. The polymer solution is a high viscosity solution having a solution viscosity of 100 to 2,000,000 centipoise, preferably 50,000 to 1,000,000 centipoise, and more preferably 100,000 to 600,000 centipoise measured as detailed below towards the end of this disclosure.

In another embodiment, the apparatus comprises a pressure controllable reactive exothermic system, such as polymerization, where the polymer solution is kept at a desired temperature ranging from 120°C to 300°C, preferably 150°C to 230°C; the pressure is decreased by less than 50 kilogram force per square centimeter (kgf/cm²), preferably by less than 25 kgf/cm² from the inlet pressure all while maintaining the polymer in a single phase with the solvent. In an embodiment, the inlet pressure is 35 to 250 kgf/cm², while the outlet pressure is 20 to 200 kgf/cm². The single phase is a liquid phase. The polymer solution is a high viscosity solution having a solution viscosity of 500 to 20,000 centipoise, preferably 1,000 to 10,000 centipoise measured as detailed below towards the end of this disclosure. One or more of these apparatuses can be part of a polymerization reactor system.

Detailed herein too is a devolatilization apparatus that comprises the apparatus in fluid communication with a pressure control device and a separate low pressure flash vessel that permits the devolatilization of volatiles (e.g., solvent, volatile by-products, volatile reactants, and the like) from the polymer solution. In an embodiment, the pressure control device is a valve that can be variably opened to control the pressure in the apparatus to keep the polymer solution in a single phase. In an embodiment, the devolatilization apparatus may further comprise a pump that facilitates charging the high viscosity polymer solution to the apparatus.

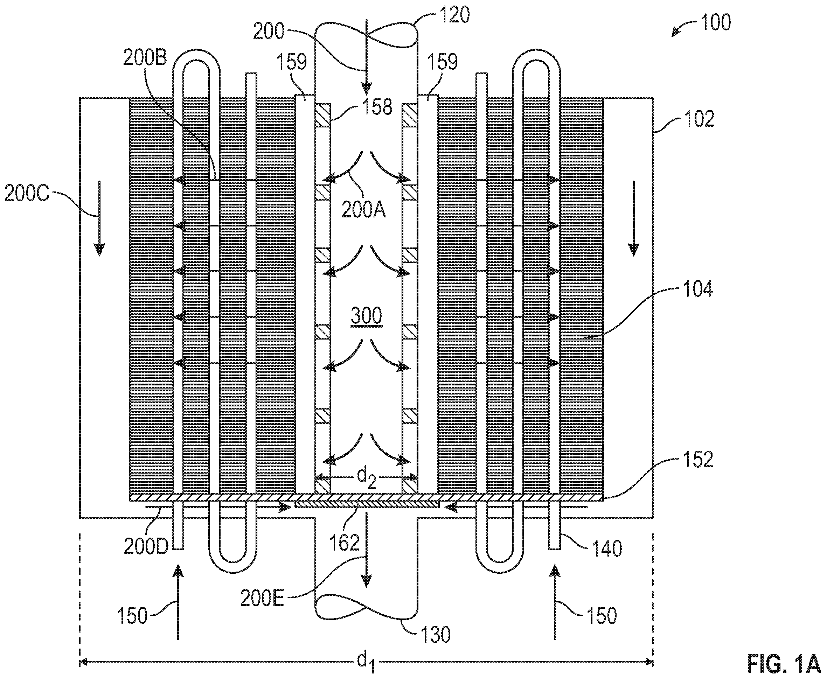

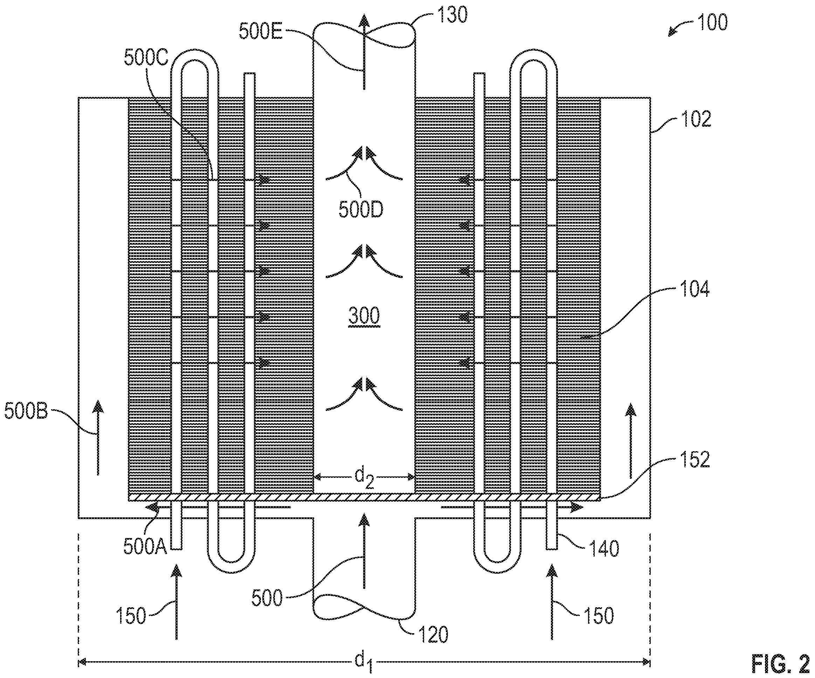

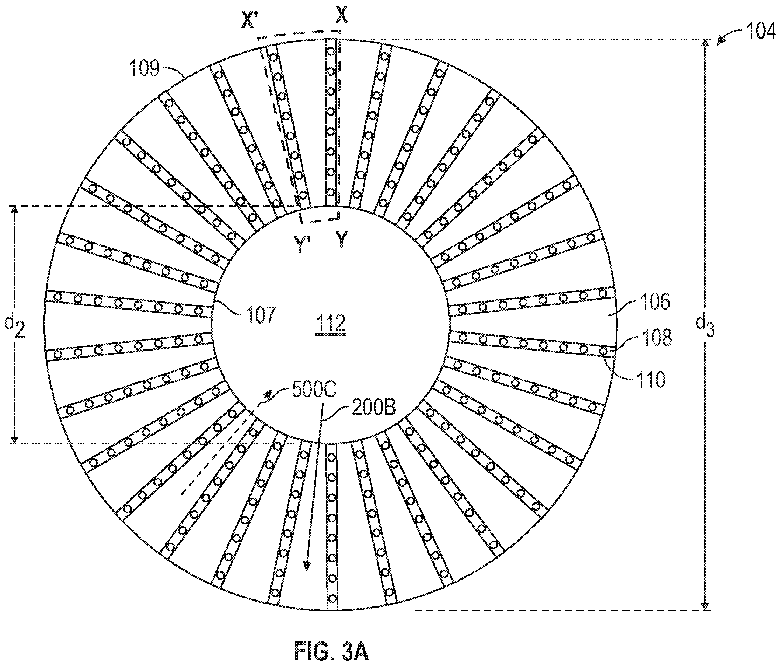

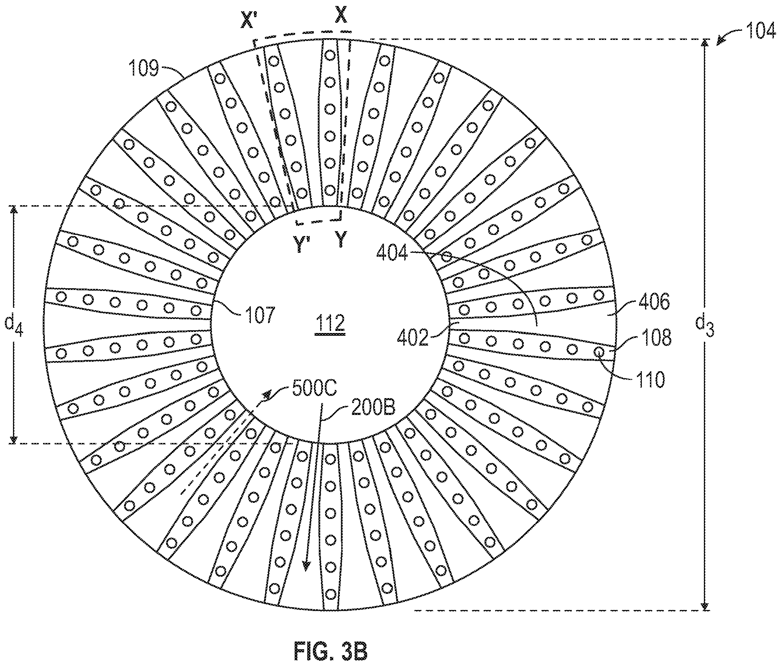

FIGs. 1A and 2 are schematic depictions of an exemplary apparatus while FIGs. 3A and 3B are top view depictions of one exemplary embodiment of a plate that is disposed in the apparatus. With reference now to the FIGs. 1A, 2, 3A and 3B, the apparatus 100 comprises a shell 102 in which is disposed a plurality of plates 104 (also referred to herein as a plate stack) that transport the polymer solution from the center of the apparatus to its outer periphery. In an embodiment, each plate 104 has a plurality of channels 106 (see FIG. 3A) and/or 406 (see FIG. 3B) that extend radially outwards from an inner circumference 107 to an outer circumference 109 of the plate and transport the polymer solution from the center of the apparatus to its outer periphery (See FIG. 1A) or alternatively, transport the polymer solution in the opposite direction from its outer periphery to its center (See FIG. 2). It is to be noted that each plate 104 may have a channel 106 formed in its floor (e.g., machined in the floor), or alternatively may have the channel 106 formed when combined with a wall 108. The combination of the plate with the wall with a plurality of channels (measured from the bottom of one plate to the bottom of an immediate neighboring plate) is also called a "layer". Put another way, the wall 108 may be an integral part of the plate 104 or may be a separate unit that contacts the plate 104 to create the channel 106. When the apparatus 100 is assembled, the channel between the floor of the plate and the walls is also bounded by the bottom of an upper neighboring plate (which acts as a roof) to form a "conduit" that conducts the polymer solution from the center of to the outer periphery of the shell or alternatively, from the outer periphery to the center of the shell.

In the FIGs. 1A and 2, the shell 102 comprises an inlet port 120 through which the polymer solution 200 (see FIG. 1A) and/or 500 (see FIG. 2) is charged to the apparatus and an outlet port 130 through which the polymer solution is removed. The inlet port 120 and the outlet port 130 are not in direct fluid communication with one another. A plate 152 (with no central hole) disposed at the bottom of the stack of plates prevents the polymer solution from flowing directly from the inlet port 120 to the outlet port 130 of the apparatus. The shell 102 does not contain any other ports other than the inlet port 120 located at the top of the shell and the outlet port 130 located at the bottom of the shell. The polymer solution is charged to inlet port 120 at a first temperature (T₁) and first pressure (P₁) and removed from the outlet port 130 at a second temperature (T₂) and a second pressure (P₂). In an embodiment, T₁ is less than T₂, while P₁ is greater than P₂. In another embodiment T₁ is greater than T₂ while P₁ is greater than P₂. In yet another embodiment T₁ is the same as T₂ while P₁ is greater than P₂.

It is to be noted that while the flow of the polymer solution is depicted and detailed in this application as being from top-to-bottom or from bottom-to-top, the apparatus can be mounted horizontally (instead of vertically as depicted in the FIG. 1A, 2, 6 and 7), and hence the flow can be described as being from left-to-right or right-to-left. The description of the flow as being from top-to-bottom or bottom-to-top is therefore just one way of enabling the reader to understand the manner of functioning of the apparatus.

In another embodiment, the polymer solution is introduced into the apparatus at inlet port 120 in a single phase and leaves the apparatus at the outlet port 130 in a single phase. During the travel of the polymer solution through the apparatus, the polymer solution always is in a single phase because of the pressure in the apparatus which is maintained at greater than 20 kgf/cm², preferably greater than 40 kgf/cm², preferably greater than 60 kgf/cm², preferably greater than 70 kgf/cm², and more preferably greater than 80 kgf/cm². The pressure in the apparatus is maintained so that the solvent, unreacted monomers and reactant by-products never vaporize in the apparatus.

In the FIG. 2, the shell 102 comprises an inlet port 120 located at the bottom of the shell through which the polymer solution 500 is charged to the apparatus and an outlet port 130 located at the top of the shell through which the polymer solution is removed. The inlet port 120 and the outlet port 130 are not in direct fluid communication with one another; the fluid must travel along the periphery of the apparatus and through the conduits (104). A plate 152 (with no central hole) disposed at the bottom of the stack of plates prevents the polymer solution from flowing directly from bottom to top of the apparatus. The shell 102 does not contain any other ports other than the inlet port 120 located at the bottom of the shell and the outlet port 130 located at the top of the shell. The polymer solution is charged to inlet port 120 at a first temperature (T₁) and first pressure (P₁) and removed from the outlet port 130 at a second temperature (T₂) and a second pressure (P₂). In an embodiment, T₁ is less than T₂, while P₁ is greater than P₂. In another embodiment T₁ is greater than T₂ while P₁ is greater than P₂. In yet another embodiment T₁ is the same as T₂ while P₁ is greater than P₂.

In the configuration depicted in the FIG. 2, the polymer solution is introduced into the apparatus at inlet port 120 in a single phase and leaves the apparatus at the outlet port 130 in a single phase. During the travel of the polymer solution through the apparatus, the polymer solution always is in a single phase because of the pressure in the apparatus which is maintained at greater than 20 kgf/cm², preferably greater than 40 kgf/cm², preferably greater than 60 kgf/cm², preferably greater than 70 kgf/cm², and more preferably greater than 80 kgf/cm². The solvent, unreacted monomers and reactant by-products never vaporize in the apparatus.

In the configuration depicted in FIG. 1A, the plates in the plate stack are supported in position by tubes 140 in a tube bundle and by a supporting slotted tube 158 (hereinafter support tube 158). The support tube 158 provides structural support to the plate stack, holds the plates in position and prevents damage to the plates during operation of the apparatus. It enables the plate stack to withstand the high pressures used in the apparatus during operation. In the configuration depicted in FIG. 2, there is no support tube 158.

As is detailed below, when the plates are stacked vertically, they form a passage 300 through which the polymer solution is transported. The support tube 158 is located in the passage 300 in the center of the apparatus and contacts the end plate 152, providing structural support to it.

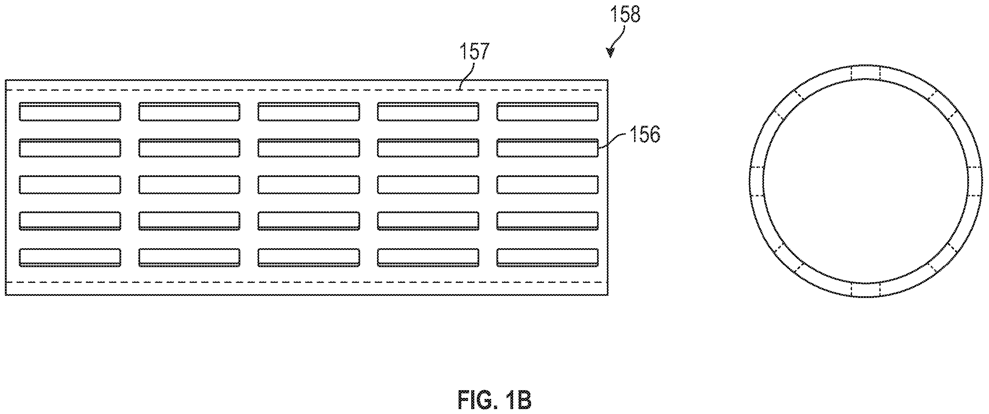

The support tube 158 comprises a tubular shell 157 having openings 156 disposed therein. The openings 156 permit the polymer solution to flow into the annulus 159 which fills with polymer solution and helps distribute it to the conduits from the passage 300 (See FIG. 1B.) or out of the conduits into the passage 300 (See FIG. 2.) The ring plate assembly 104 may be held together in position by means of a lock nut (162) which is located at the end of the support tube 158.

The following paragraphs detail the top-down flow of the polymer solution as seen in the FIG. 1A. The configuration where the polymer solution flows from bottom to top as depicted in the FIG. 2 is detailed later.

### Top-Down Flow

The term "top-down" flow is used to detail the flow of the polymer solution flow in the FIG. 1A (when the apparatus is mounted vertically). It may also be referred to as inside-out flow, since the polymer solution flows from the inside of the apparatus to the outer periphery of the apparatus. The terms "top-down" flow or "inside-outside" flow are just one way of illustrating to a reader how the apparatus works. The flow can also occur from left-to-right or right-to left, if the apparatus is mounted horizontally instead of vertically.

In the FIG. 1A and FIG. 3A, each plate 104 (except for the bottom-most plate 152) of the plurality of plates has an opening 112 which permits the polymer solution to travel from the top to the bottom of the apparatus. When the plates 104 are stacked vertically, the openings 112 from each of the plates line up vertically to form a passage 300 through which the polymer solution is transported in the apparatus. In an embodiment, the opening 112 is located at the center of the respective plates 104 and each plate 104 is ring-shaped as may be seen in the FIGs. 3A and 3B.

The shell 102 may have any cross-sectional geometry, but is preferably circular in its cross-sectional area when viewed from the top. In an exemplary embodiment, the shell 102 is preferably a cylinder having a height of 200 to 700 centimeters, preferably 250 to 400 centimeters and having an inner diameter d₁ of 120 to 400 centimeters, preferably 150 to 180 centimeters. The inner diameter d₁ referred to herein is the diameter measured at the shell inner surface. An exemplary material of construction for the shell 102 is a metal. Examples of suitable metals are carbon steel, stainless steel or other metal alloys.

Each plate 104 (See FIGs. 3A and 3B.) has an outer diameter d₃ that is slightly less than the inner diameter d₁ of the shell. The space between the inner surface of the shell and the outer circumferential surface of the plate 104 permits the passage of the polymer solution during its travel through the apparatus 100. This will be discussed later. The average difference between the shell inner diameter d₁ (see above) and the plate outer diameter d₃ is 1 to 150 centimeters, preferably 10 to 50 centimeters.

The opening 112 in the plate 104 has a diameter d2 of 10 to 150 centimeters, preferably 40 to 100 centimeters. The annular space 159 has a width of 10 to 60 centimeters, preferably 20 to 50 centimeters. The support tube 158 has a thickness of 5 to 50 centimeters, preferably 5 to 20 centimeters. There can be 2 to 40 openings 156 along the length and surface of the support tube 158, preferably 6 to 36 openings.

An exemplary material of construction for the plate 104 is a metal. Examples of suitable metals for use in the plate 104 are aluminum, carbon steel, stainless steel or other metal alloys. In an embodiment, the inner circumference 107 and the outer circumference 109 of the plates 104 are both concentric with each other and are also concentric with an inner surface of the shell 102.

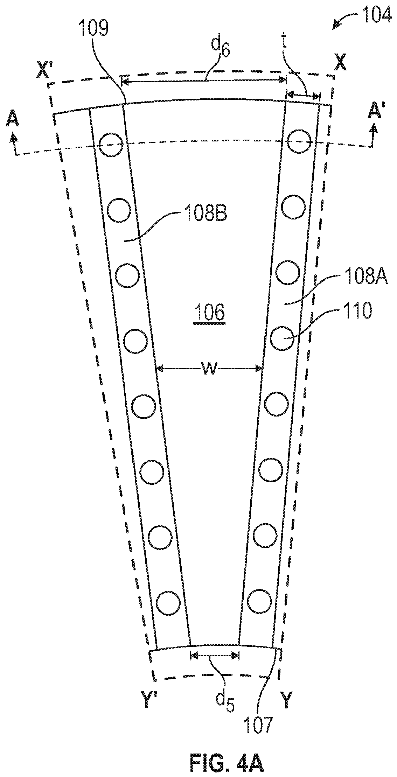

With reference now to the FIGs. 1A, 3A and 4A, each plate contains a plurality of channels 106 that increase in width for at least a portion of the radius that extends from the inner circumference 107 to the outer circumference 109 of the plate 104. FIG. 4A is an expanded schematic top view of the section XYY'X' shown in the FIG. 3A and represents one possible design of the channel 106. In an embodiment, each plate contains a plurality of channels 106 that increase in width from the inner circumference 107 to the outer circumference 109 of the plate 104. In an embodiment, each channel may have a constant width from the inner circumference 107 to the outer circumference 109 of the plate 104.

The polymer solution 200 that enters the apparatus from the inlet port 120 travels along the passage 300 to contact the plurality of plates 104 where it travels radially outwards along the plurality of channels 106. Disposed in the plate 104 between each successive pair of channels 106 is a wall 108 that contains holes 110 to house banks of tubes 140 through which a heat transfer fluid 150 is transported (See FIG. 1A.).

The heat transfer fluid 150 facilitates the heating or cooling of the polymer solution as it is transported through the apparatus 100 (See FIG. 1A.). The heat transfer fluid 150 may be transported through the tubes of the tube bundle 140 from the bottom to the top of the apparatus or alternatively, from the top to the bottom of the apparatus. In yet another embodiment, the tubes 140 may be arranged so that the fluid is transported back and forth through the apparatus 100. Some of the tubes can be transporting the fluid from the top to the bottom, then connecting into a common header, then transporting the fluid from the bottom to the top.

As seen in the FIG. 4A, the channel 106 has a gradually increasing width in the radial direction and is bounded by a pair of walls 108A and 108B and extends from the inner circumference 107 to the outer circumference 109 of the plate 104. The channel 106 never decreases in width from the inner circumference 107 to the outer circumference 109.

In the embodiment depicted in the FIG. 4A, the walls 108A and 108B extend radially outwards linearly from the inner circumference 107 to the outer circumference 109 of the plate 104. The walls 108A and 108B are closer to each other at the inner circumference 107 and are farther apart at the outer circumference 109. This channel 106 therefore has a gradually expanding width "w" from the inner circumference 107 to the outer circumference 109 of the plate. As noted above, the walls 108A and 108B may be integral with the plate 104 (i.e., the wall 108 and the plate 104 are a monolithic piece) or may alternatively be a separate stand-alone piece that is assembled with the flat plate 104 to form the channel 106.

The channel width at the inner circumference "ds" is less than the channel width "d₆" at the outer circumference. The ratio of d₆ to d₅ is 2:1 to 6:1, preferably 2.2:1 to 3.5:1. In an embodiment, the distance d₆ is 4 to 8 centimeters, preferably 5 to 7 centimeters, while the distance d₅ is 1to 4centimeters, preferably 2to 3 centimeters. The channel 106 has a floor that has a depth of 0.10 to 0.75 centimeters, preferably 0.2 to 0.4 centimeters from the top of the walls 108.

The polymer solution therefore contacts an ever widening channel as it travels from the opening 112 (See FIG. 1A.) to the outer circumference 109. This design is advantageous in that it allows for a lower pressure drop in the fluid as it travels through the slot and a large heat transfer area to allow for optimal heat transfer.

The walls 108 are situated between the channels 106 and separate successive channels on a particular plate from one another. The walls 108 and the channels 106 are evenly distributed across the surface of the plate 104 (See FIGs. 3A and 3B.). As noted above, each wall 108 contains a plurality of holes 110 that houses tubes 140 through which the fluid 150 flows (See FIG. 1A.).

In an embodiment, a single plate 104 comprises 30 to 90, preferably 55 to 65 channels, and 30 to 90, preferably 55 to 65 walls 108, with the walls and channels alternating with each other evenly around the plate 104. Each wall 108 contains a bank of tubes 140. Each wall 108 contains 8 to 40 tubes, preferably 10 to 35 tubes. In an embodiment, the tubes are metal tubes and may comprise carbon steel.

The wall 108 has a thickness "t" of 1.5 to 3 centimeters, preferably 2 to 2.5 centimeters. In an embodiment, the wall thickness is 2 to 10% larger, preferably 3 to 5% larger than the outer diameter of the tube 140 in the tube bundle. Each tube 140 in the tube bundle has an inner diameter of 1 to 3 centimeters and an outer diameter of 1.5 to 4.0 centimeters. A preferred inner diameter for the tube is 1.5 to 2 centimeters and a preferred outer diameter is 2.0 to 2.2 centimeters.

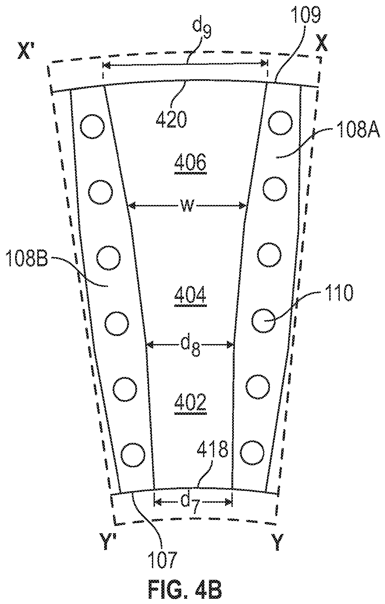

The FIGs. 3B and 4B depict another wall 108 design not covered by the invention as defined in the claims that causes the width "w" of the channel 106 to decrease over a portion of the plate radius and then to increase over a portion of the plate radius. In this embodiment, the wall 108 can be integral with the plate 104 (e.g., a monolithic unit) or separate from the plate 104. With reference now to the FIGs. 1A, 3B and 4B, each plate contains a plurality of channels 106 that decrease in width for at least a portion of the radius that extends from the inner circumference 107 to the outer circumference 109 of the plate 104. After decreasing for a portion of the plate radius, the width then increases as the channel progresses to the outer circumference 109.

In FIG. 4B, there is depicted the shape of the channel 106 that comprises three zones, a first generally converging zone 402 which is wider at its entrance than its exit, a second, restrictive zone 404 wherein the channel achieves a minimum width sufficient to cause a pressure drop across the restrictive zone, thereby preventing substantial flashing of the volatile components while in the first zone; and a third generally diverging zone 406 designed to allow for a slight decrease in pressure in the polymer solution, all while continually retaining the polymer solution in a single phase. The distance between the inner circumference 107 and outer circumference 109 for the plate 104 (which represents the length of the channel 106) of the FIG. 4B is detailed above and is the same as detailed for the FIGs. 3A and 4A.

With reference now to the FIG. 4B, the distance d₉ is greater than d₇, which is in turn greater than d₈. The first zone 402 has an opening 418 into which the polymer solution enters the channel 106. The length of the first zone is from 5 to 20% of the total length of the channel and the width at the inner circumference 107 is from 1.0 to 5.0 centimeters (cm). The ratio of the width of the widest point of the first zone to the width of the narrowest point of the zone varies from 1.5:1 to 10:1.

The second zone 404 begins at the terminus of the first zone and varies in length from about 1.0% to 40% of the total length of the channel connecting with the entrance of the third zone. The width of the second zone may remain constant for its entire length, decrease to a minimum and then remain constant or decrease to a minimum and thereafter increase again. Preferably at its narrowest point the second zone is 0.25 to 4.00 centimeters wide, more preferably 1 to 2 centimeters wide. The ratio of the width of the widest point of the zone to the width of the narrowest point of the zone is preferably from 1.0:1 to 1.5:1. Also preferably, the ratio of the widest width of the first zone to the narrowest width of the second zone is greater than 2:1, and preferably greater than 3:1.

The third zone 406 begins at the terminus of the second zone and terminates with an exit 420 for discharge of the polymer solution. The length of the third zone is from about 40 to 85% of the total length of the channel. The ratio of the width of the third zone at its terminus to that at its entrance is preferably from 1.75:1 to 10:1. The width of the zone need not be constantly increasing from entrance to terminus but may follow a sinusoidal or other curved shape. Also preferably, the ratio of the maximum width of the third zone to the minimum width of the restrictive zone is greater than 2:1.

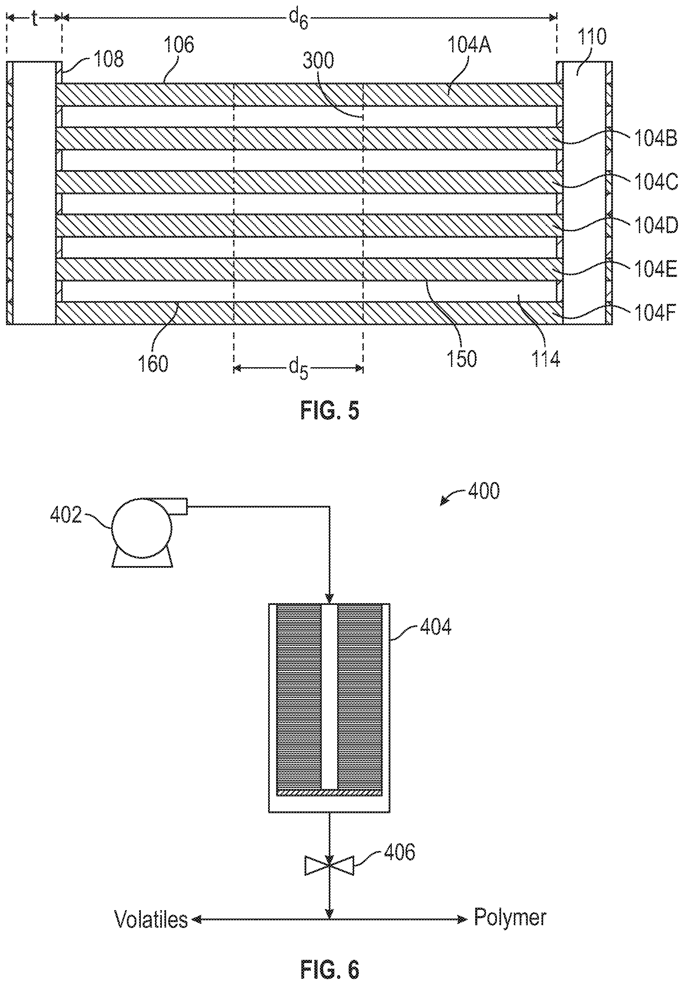

As seen in the FIG. 1A, the plates are stacked atop one another in the shell to facilitate heat transfer to a polymer solution that is charged to the apparatus. FIG. 5 is a depiction of a section AA' from the FIG. 4A and shows a stack of 6 plates 104 (104A, 104B, 104C, 104D, 104E and 104F) stacked atop each other. FIG. 5 depicts a side, partial cross-sectional view showing a portion of the outer circumference of a stack of plates 104. The stack comprises a plurality of plates 104 in the shape of disks stacked and arranged so as to define the walls, floor and ceiling of each conduit 114 and secured together so as to define a passage 300 (See FIG. 1A.) for receiving the polymer solution to be heated. The base of one plate 104E contacts an upper surface of the wall of an adjacent plate 104F to form the conduit 114 comprising a floor 160, a roof 150 and walls 108 through which the polymer solution is transported.

Each conduit may have a constant width over its entire length or a varying width over its entire length. As discussed above for the respective channels, the width can gradually increase in length from the inner circumference to the outer circumference of the plate. In an embodiment, it can increase in width over a portion of the length and decrease in width over the remaining length of the conduit. In another embodiment, it can decrease in width over a portion of the length and increase in width over the remaining length of the conduit.

Tubes 140 (not shown) pass through holes 110 in the wall 108, and are adapted to transfer heat into the channels 106. In one embodiment, the tubes 140 secure the plates 104 together to form a stack (when the walls 108 and the plate 104 are a single integral component). In another embodiment, the tubes 140 secure the walls 108 and the plates 104 together to form the stack (when the walls 108 are a separate component from the plate 104). The heat is transferred by the fluid 150 in the tubes 140 to the walls 108 and from the walls to the floor 160 of the channel 106 and the roof of the channel 150.

As noted above, the plates 104 are stacked vertically above each other in the shell 102. Each plate is separated from a neighboring plate by a space of 0.1 to 1.0 centimeters, preferably 0.2 to 0.3 centimeters. The total number of plates (in a stack) in the shell 102 (and hence in the apparatus) is 50 to 1000, preferably 700 to 800. In an embodiment, the total number of channels in the shell is 1,000 to 100,000 and the total number of walls in the shell is 1,000 to 100,000.

With reference now to the FIGs. 1A, 3A, 3B, 4A and 4B, in one manner of operating the apparatus, the polymer solution 200 entering the inlet port 120 travels a path depicted by numerals 200A-200B-200C-200D-200E in the apparatus, till it exits the apparatus at the outlet port 130 (See FIG. 1A.). The polymer solution 200 enters the apparatus at a temperature T₁ and pressure P₁ at inlet port 120 and initially travels vertically downwards along passage 300. Plate 152 prevents its vertical passage from the inlet port 120 to the outlet port 130. The polymer solution 200 then travels radially outwards along path 200A from the passage 300 towards the plate stack 104 where it enters the plurality of channels 106 where it travels along path 200B (See FIGs. 3A and 3B.) situated in the plate. At the same time the fluid 150 is transported through the tubes 140 and transfers heat from the fluid to the polymer solution travelling radially outwards in the channels 106 along path 200B. During the travel through the plate stack, the temperature of the polymer solution is increased to a temperature greater than T₁ while the pressure is simultaneously reduced to a pressure of less than P₁.

It is to be noted that the apparatus may also be used as a cooler. In the event that the apparatus is used to effect cooling, the temperature of the polymer solution is reduced during its transport through the apparatus. In another embodiment, if the cooler is used in a reactive system, it can be used to extract heat generated during a reaction (e.g., an exothermic reaction), and the temperature of the polymer solution can either increase or decrease, depending on the amount of heat released from the reaction versus the amount of heat removed. The polymer solution is still in a single phase during its travel through the plate stack. In an embodiment, the single phase is a liquid phase.

The polymer solution emanating from the outer circumference 109 of the plurality of channels 106 travels in the space between the shell and the outer circumference of the plate stack along path 200C to the bottom of the apparatus. It is then transported from the bottom of the apparatus to outlet port 130 along path 200D and then out of the apparatus via outlet port 130 along path 200E while still being in a single phase.

The polymer solution exiting the apparatus has an outlet temperature T₂, which can be either higher, lower or the same as (in a reactive, exothermic system) the inlet temperature T₁ and an outlet pressure P₂, which is lower than the inlet pressure P₁.

### Bottom-to-top flow

The term "bottom-to-top" flow is used to detail the flow of the polymer solution flow in the FIGs. 2, 3A and 3B (when the apparatus is mounted vertically). It may also be referred to as outside-inside flow, since the polymer solution flows from the outer periphery of the apparatus to the inside of the apparatus. The terms "bottom-to-top" flow or "outside-inside" flow are just one way of illustrating to a reader how the apparatus works. The flow can also occur from left-to-right or right-to left, if the apparatus is mounted horizontally instead of vertically.

FIGs. 2, 3A and 3B depict an embodiment, when the polymer solution flows from the bottom of the apparatus to the top. The arrangement of the plates 104 in the shell 102 is the same for this configuration (See FIG. 2) as it is for the FIG. 1A. The flow direction however, is different, from that of the FIG. 1A. As shown in the FIG. 2, the polymer solution is introduced into the apparatus via an inlet port 120 located at the bottom of the device and exits at the outlet port 130 located at the top of the device. A flat plate 152 located at the bottom of the plate stack prevents a direct flow of the polymer solution from the port 120 to the port 130. The polymer solution travels along path 500 at inlet port 120 and travels upwards between the flat plate 152 and the outer shell 102 of the apparatus via paths 500A and 500B. The polymer solution then enters the plate stack and travels radially inwards through the conduits along path 500C (See FIG. 3A and 3B) from the outer circumference 109 towards the inner circumference 107 of each plate. The polymer solution is heated or cooled as it travels through the conduit in a manner similar to that in the FIG. 1A. When "bottom-to-top" flow is used in the apparatus, the support tube 158 is not used in the apparatus. The tubes and tie rods hold the plates together in this configuration.

During the travel through the plate stack, the temperature of the polymer solution is increased to a temperature greater than T₁ while the pressure is simultaneously reduced to a pressure of less than P₁. In another embodiment, the temperature of the polymer solution is reduced to a temperature lower than T₁ while the pressure is simultaneously reduced to a pressure of less than P₁. In an embodiment, the polymer solution is still in a single phase (e.g., a liquid phase) during its travel through the plate stack. In another embodiment, the single phase is a liquid phase.

It is to be noted that the apparatus may also be used as a cooler. In the event that the apparatus is used to effect cooling, the temperature of the polymer solution is reduced during its transport through the apparatus. In another embodiment, if the cooler is used in a reactive system, it can be used to extract heat generated during a reaction (e.g., an exothermic reaction), and the temperature can be going either up or down, depending on the amount of heat released from the reaction versus the amount of heat removed.

The polymer solution emanating from the plate stack enters the passage 300 at the center of the apparatus 100 via path 500D. From the center it is transported to the outlet 130 of the apparatus via path 500E. In one embodiment, the outlet 130 can be connected with a conduit that further transports the polymer solution. The conduit can be part of reactor system. In another embodiment, the outlet 130 is connected to a conduit which is then connected to the valve at which the polymer solution is subjected to depressurization to undergo phase separation.

### Operating Conditions

In an exemplary embodiment, the inlet temperature T₁ is 120 to 230°C and inlet pressure P₁ is 35 to 250 kgf/cm², while the outlet temperature T₂ is 150 to 300°C and the outlet pressure P₂ is 20 to 200 kgf/cm².

The polymer solution generally contains 10 to 95 weight percent (wt%), preferably 20 to 85 wt% of a polymer, based on the total weight of the polymer solution. The solution has a viscosity of 1,000 to 2,000,000 centipoise, preferably 50,000 to 1,000,000 centipoise, and more preferably 100,000 to 600,000 centipoise. The average solution viscosity may be 300,000 to 350,000 centipoise measured as detailed below. The polymer solution is transported through the apparatus at a flow rate of 40,000 to 2,000,000 kilograms per hour, preferably 100,000 to 200,000 kilograms per hour, and more preferably 50,000 to 150,000 kilograms per hour. The flow is 0.5 to 50 kilograms/hr/conduit, preferably 1 to 5 kilograms/hr/conduit, and more preferably 3 to 4.5 kilograms/hr/conduit.

The fluid 150 has a maximum inlet temperature of 280 to 300°C and a minimum outlet temperature of 200 to 220°C. The fluid generally decreases by a temperature of 5 to 10°C during heating of the polymer solution. When the apparatus is used as a heater, the maximum inlet temperature for the fluid is always greater than the minimum outlet temperature. The apparatus may alternatively be used as a cooler, in which case, the minimum outlet temperature for the fluid is always greater than the maximum inlet temperature and the cooling fluid generally increases by a temperature of 5 to 10°C.

The polymer that is mixed with the solvent may be a thermoplastic polymer, a lightly crosslinked polymer, or a blend of a thermoplastic polymer with a lightly crosslinked polymer. The polymer can be an oligomer, a homopolymer, a copolymer, a block copolymer, an alternating copolymer, a random copolymer, a graft copolymer, a star block copolymer, a dendrimer, or the like, or a combination thereof.

Examples of the polymers that can be mixed with the solvent include a polyolefin, a polyacetal, a polyacrylic, a polycarbonate, a polystyrene, a polyester, a polyamide, a polyamideimide, a polyarylate, a polyarylsulfone, a polyethersulfone, a polyphenylene sulfide, a polyvinyl chloride, a polysulfone, a polyimide, a polyetherimide, a polytetrafluoroethylene, a polyetherketone, a polyether etherketone, a polyether ketone, a polybenzoxazole, a polyoxadiazole, a polybenzothiazinophenothiazine, a polybenzothiazole, a polypyrazinoquinoxaline, a polypyromellitimide, a polyquinoxaline, a polybenzimidazole, a polyoxindole, a polyoxoisoindoline, a polydioxoisoindoline, a polytriazine, a polypyridazine, a polypiperazine, a polypyridine, a polypiperidine, a polytriazole, a polypyrazole, a polypyrrolidine, a polycarborane, a polyoxabicyclononane, a polydibenzofuran, a polyphthalide, a polyanhydride, a polyvinyl ether, a polyvinyl thioether, a polyvinyl alcohol, a polyvinyl ketone, a polyvinyl halide, a polyvinyl nitrile, a polyvinyl ester, a polysulfonate, a polynorbornene, a polysulfide, a polythioester, a polysulfonamide, a polyurea, a polyphosphazene, a polysilazane, a polyurethane, a polysiloxane, or the like, or a combination thereof.

Exemplary polymers are polyolefins. Examples of polyolefins include homopolymers and copolymers (including graft copolymers) of one or more C₂ to C₁₀ olefins, including polypropylene and other propylene-based polymers, polyethylenes and other ethylene-based polymers, and olefin block copolymers. Such olefin-based polymers include high density polyethylenes (HDPE), low density polyethylenes (LDPE), linear low density polyethylenes (such as the LLDPE marketed by The Dow Chemical Company under the trademark "DOWLEX"), enhanced polyethylenes (such as those marketed by The Dow Chemical Company under the trademark "ELITE"), polymers made via molecular or single-site catalysts, such as metallocene, constrained geometry, polyvalent aryloxy ether, and the like. Examples of such polymers are linear or substantially linear ethylene copolymers (such as those marketed by The Dow Chemical Company under the trademarks "AFFINITY" and "ENGAGE" and those marketed by ExxonMobil Chemical Company under the trademarks "EXACT" and "EXCEED"), propylene-based copolymers (such as those marketed by The Dow Chemical Company under the trademark "VERSIFY" and those marketed by ExxonMobil Chemical Company under the trademark "VISTAMAXX"), and olefin-block copolymers (such as those marketed by The Dow Chemical Company under the trademark "INFUSE"), and other polyolefin elastomers (such as the EPDM marketed by The Dow Chemical Company under the trademark "NORDEL" or "NORDEL IP").

The solvent will vary depending upon the manufactured polymer. Aprotic polar solvents such as water, propylene carbonate, ethylene carbonate, butyrolactone, acetonitrile, benzonitrile, nitromethane, nitrobenzene, sulfolane, dimethylformamide, N-methylpyrrolidone, or the like, or combinations thereof may be used to solvate some polymers. Polar protic solvents such as methanol, acetonitrile, nitromethane, ethanol, propanol, isopropanol, butanol, or the like, or combinations thereof may also be used. Other non-polar solvents such a benzene, toluene, methylene chloride, carbon tetrachloride, hexane, diethyl ether, tetrahydrofuran, or the like, or combinations thereof may be used to solvate some polymers. Co-solvents comprising at least one aprotic polar solvent and at least one non-polar solvent may also be utilized to modify the swelling power of the solvent and thereby adjust the solvating power of the solvent. An exemplary solvent for polyolefins is Isopar^{™} E from ExxonMobil.

The aforementioned polymers are manufactured in a solution, high pressure, or slurry polymerization reactor in which the monomers and produced polymers are entrained in a solvent or diluent. Other polymer solutions may also be manufactured (intentionally or unintentionally) containing large or small amounts of volatile components. Typical volatile components include solvents (such as aromatic or aliphatic inert diluents), unreacted monomers and/or comonomers and low molecular weight reaction by-products. The amount of solvent, unreacted monomers, unreacted comonomers, and/or other volatile components to be removed from the polymer solution may range from a large excess to a mere contaminating amount. Molten polymers produced in solution, high pressure, or in slurry polymerization plants, even after an initial flash-devolatilization stage, often contain from 10 to 60 weight percent or more of dissolved or entrained volatile components at the point they are processed in the apparatus. Typically, the amount of residual volatile components remaining in the devolatilized polymer should be less than about 0.5 wt%, preferably less than 0.1 wt%, and more preferably less than 0.05 wt%, based on the total weight of the devolatilized polymer as measured by ASTM D-4526.

Depending upon the starting concentration of volatile components in the flowable material to be devolatilized, and the level of residual volatiles that are acceptable in the devolatilized product, more than one stage (such as two or three stages) of devolatilization apparatus may be used. In addition, the devolatilization apparatus may be used in combination with other known devolatilization techniques, such as simple flash-devolatilization, ionic fluid extraction, extraction using a super-critical fluid, distillation, steam-stripping or carbon-dioxide-stripping, either in separate devolatilization stages or (in the case, for example, of steam-stripping or carbon-dioxide stripping) in combination with the apparatus of this invention within the same devolatilization stage.

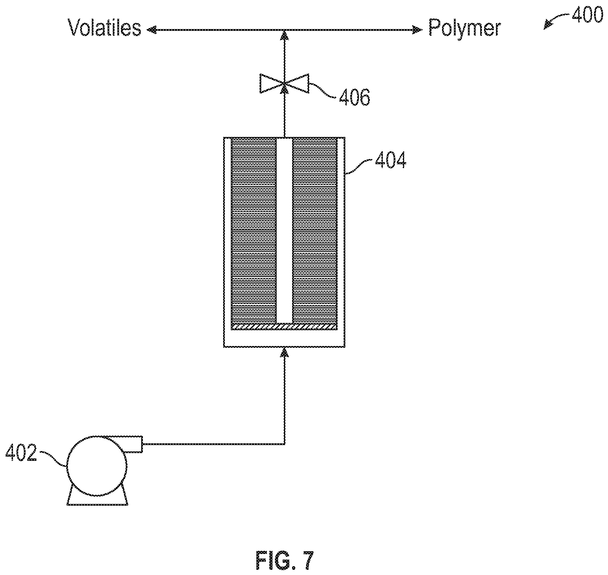

In an embodiment, the apparatus detailed above may be used in conjunction with a pump and a pressure regulating device to form a devolatilization apparatus. This is depicted in the FIGs. 6 and 7. Fig. 6 depicts the devolatilization apparatus when the flow is from top to bottom, while FIG. 7 depicts the devolatilization apparatus when the flow is from the bottom to the top. The devolatilization apparatus 400 comprises a pump 402 located upstream of the apparatus 404. The pump 402 is operative to pump the polymer solution at a pressure of 35 to 250 kgf/cm² to the apparatus 404. The apparatus functions as detailed above to increase the temperature of the polymer solution while simultaneously decreasing its pressure (and maintaining the polymer solution in a single phase) and then discharges the polymer solution in a single phase to a pressure regulating device 406. An additional heat exchanger (not shown) (that functions as a cooler) that is operative to cool the polymer to a lower temperature may be in fluid communication with the apparatus if desired.

The pressure regulating device is located downstream of the apparatus and is operative to keep the polymer solution in single phase throughout the apparatus. The polymer with a now substantially reduced volatile content is collected in a first tank (not shown) and may be subjected to further downstream process while the solvent is collected and recycled. In an embodiment, the devolatilization apparatus may include a flashing vessel (not shown) located downstream of the pressure regulation device.

In an embodiment, the pump 402 is a positive displacement pump. The pressure regulating device is preferably a valve. The pressure regulating device is used to keep the polymer solution in a single phase until it is desirable to separate the volatiles from the polymer. Exemplary valves 406 are gate valves, ball valves, sluice valves, or the like. In an embodiment, the pressure regulating device may be a nozzle or an orifice.

In some embodiments for the removal of solvents, unreacted monomers and comonomers from molten polymers, where the concentration of volatile components in the molten polymer is very high, adequate devolatilization may necessitate the use of more than one apparatus in series to reduce the volatile content in the molten polymer in two or more steps.

Although most of the description herein applies to a heating apparatus, it should be obvious to those familiar in the art that the same type of design could be used for cooling a polymer solution or for the removal of the heat of polymerization from a polymer reaction. This cooling apparatus would be operated in a similar fashion except that instead of a heating fluid, a cooling fluid would be used in the tubes 150 (See FIG. 1A). The cooling fluid used would be at a lower temperature than the polymer solution. The concept of improved heat transfer between a fluid and a viscous polymer solution with minimal pressure drop would still be considered advantageous. The apparatus detailed herein is described in the following nonlimiting examples.

### EXAMPLES

### Example 1

This is an example that demonstrates the apparatus disclosed herein. A flat plate heat exchanger is designed in a cylindrical shell configuration with an outer diameter d₁ of 160.2 centimeters (See FIG. 1A.) and an inner diameter d₂ of 90 centimeters and a total height of 360 centimeters (See FIG. 1A.). The exchanger comprises multiple layers. A layer comprises a plate and the wall. Each layer of the exchanger is comprised 60 channels. Each channel has a height of 0.254 centimeters and each layer is separated by a plate 0.254 centimeters tall.

A bank of tubes carries the fluid and is placed perpendicular to the layers of the heat exchanger. The heat exchanger contains 60 banks of tubes. Each bank of tubes comprises 13 carbon steel tubes with an internal diameter of 1.42 centimeters and an external diameter of 2.23 centimeters. Each wall is 2.28 centimeters thick. Each channel has a width at the inner circumference of 2.5 centimeters and a width at the outer circumference of 6.3 centimeters and a height of 0.254 centimeters. The total number of conduits is 60 per layer, comprising a total of 43,200 total conduits.

Using standard heat transfer calculations for convection through the fluid and conduction across the tube walls, an overall heat transfer coefficient, U, for this exchanger is calculated to be U = 130 W/m²•K. The total internal heat transfer area (A) for 43,200 channels is 1,430 m² resulting in a heat exchanger with the product of U times A (UA) value of 185,900 W/K.

Given a polymer solution flowing through this apparatus at 159,000 kg/hr and a solution temperature increasing from 160 to 250°C and a fluid temperature reduction from 290 to 283°C (during the course of the polymer solution in the apparatus), the log mean temperature difference for this exchanger is 74°C and the total heat duty is calculated as 13.8million Watts.

The total flow through each conduit is approximately 3.7 kilograms/hr. Assuming a solution viscosity of 330,000 cP and using standard pressure drop (Bernoulli) calculations, the pressure drop is calculated as 31.5 kgf/cm² through the exchanger.

Without being limited to theory, the detailed apparatus design functions effectively because the polymeric solution is kept at a single-phase inside the heater, allowing for maximum heat transfer rate, which is calculable. If the solution were to change phases, the heat transfer rate would drop substantially and the solution would lose heat due to vaporization. Both of these are avoided ensuring that the polymer solution in the apparatus remains in a single-phase throughout its residence time in the apparatus. The polymer solution in the apparatus never separates into two (or more) phases.

This design is advantageous in that it can handle high solution viscosities of 100,000 to 2,000,000 centipoise, with an average solution viscosity of 325,000 to 375,000 centipoise. It can also handle high flow rates of 140,000 to 170,000 kilograms/hour at polymer concentrations of greater than 30 wt%, preferably greater than 40 wt% and more preferably greater than 50 wt%, based on the total weight of the polymer and the solvent. The design permits a pressure drop in the polymer solution of 35 to 200 kgf/cm² from the inlet port to the outlet port, while at the same time raising the temperature of the polymer solution by an amount of greater 40°C, preferably greater than 50°C, and more preferably greater than 60°C, from the initial inlet temperature.

One of the advantages of this design that pressure drops in the polymer solution of 14 to 50 kgf/cm² from the inlet port to the outlet port can be handled by existing positive displacement pumps (e.g., gear pumps or screw pumps).

### Example 2

This is a comparative example and is performed on a shell and tube heat exchanger with the same fluid and flow rates as the above example. For the shell and tube exchanger, a standard design is used with the polymer solution flowing through the tubes and the medium flowing through the shell. Each tube is designed with an internal diameter of 2.0 centimeters, an outer diameter of 2.5 centimeters and a total length of 260 centimeters. Each tube is filled with twisted-tape type mixing elements with an aspect ratio of 1.5. A total of 8,000 tubes are fit inside a shell of diameter 300 centimeters.

Both heat transfer and pressure drop calculations for these mixers are calculated by the method of Joshi. In this manner, the Nusselt number is calculated to be 18.0, giving an overall heat transfer coefficient, U, of 115 W/m²•K. The total internal heat transfer area for 8,000 tubes is 1,630 m² resulting in a heat exchanger UA value of 187,450 W/K. The log mean temperature difference for this exchanger is 74°C and the total heat duty is calculated to be about 12.7 million Watts.

Pressure drop through the tubes is calculated using different correlations to give pressure drops ranging from 60 to 110 kgf/cm², with the most likely value being approximately 75 kgf/cm². Therefore, this exchanger type would have too high a pressure drop. As the outlet pressure of the exchanger has to be at least 20 kgf/cm² in order to keep the polymer solution single-phase, the total pressure drop is likely to exceed the capability of a screw pump or even a gear pump. That is why this type of exchanger is not preferred for this unit operation.

The tube diameter can be increased to alleviate the pressure drop issue. However, at the pressures required for this unit operation to keep the same number of tubes, the shell size will become difficult to manufacture. A smaller number of larger diameter tubes increases the pressure drop (higher velocity through them) and it requires a longer length to provide the heat transfer area needed for the heat transfer, thereby again increasing pressure drop. That is why this type of exchanger has inherent limitations for this application.

The higher pressure drop makes it very difficult to keep the polymer solution single-phase towards the exit of the exchanger. If the solution is not single-phase but it reaches its bubble point, it will lose heat transfer rate and make it very difficult to heat up the solution to the desired temperature. In addition, the system would be unpredictable.

### Example 3

This is also a comparative example. If the flat plate heater described in (a) above were installed inside a devolatilizer vessel (a vessel where the polymer solution would actually phase separate into two phases), then there would be a few major issues.
1) The polymer solution would become two-phase inside the channel. This would decrease the heat transfer rate.
2) The size of this exchanger would be too large - it is unlikely that such an apparatus can be constructed due to stresses.
3) The fluid temperature could not be as high as 290°C because that would cause the solution to reach the bubble point inside the flat plate heater (FPH) core or at the entrance of the channel, thus again reducing heat transfer effectiveness. In addition, lower fluid temperature would dramatically reduce the driving force for heat transfer. Therefore, the example as demonstrated in Example 1 is the preferred example.

### Example 4

This is an inventive theoretical example that details the use of the apparatus in a cooling mode to remove the heat of polymerization from the polymer solution. A flat plate cooler is designed in a cylindrical shell configuration with an outer diameter d₁ of 282 centimeters (See FIG. 1A.) and an inner diameter d₂ of 105 centimeters and a total height of 370 centimeters (See FIG. 1A.). The exchanger comprises multiple layers. A layer comprises a plate and the wall. Each layer of the exchanger comprises 65 conduits. Each conduit has a height of 0.381 centimeters and each layer is separated by a plate 0.254 centimeters tall.

A bank of tubes carries the fluid and is placed perpendicular to the layers of the heat exchanger. The heat exchanger contains 65 banks of tubes. Each bank of tubes comprises 25 carbon steel tubes with an internal diameter of 1.58 centimeters and an external diameter of 1.91 centimeters. Each wall is 1.65 centimeters thick. Each channel has a width at the inner circumference of 2.5 centimeters and a width at the outer circumference of 11.1 centimeters and a height of 0.381 centimeters. When the plates are assembled, the total number of conduits is 65 per layer, comprising a total of 37,800 total conduits.

Using standard heat transfer calculations for convection through the fluid and conduction across the tube walls, an overall heat transfer coefficient, U, for this exchanger is calculated to be U = 73 W/m²•K. The total internal heat transfer area (A) for 37,800 conduits is 4,852 m² resulting in a heat exchanger with the product of U times A (UA) value of 354,200 W•K.

Given a polyethylene production rate of 22,000 kg/hr and a polyethylene heat of polymerization of 94.5 kJ/mol, the required heat removal is calculated as 21.8 million Watts. Assuming a polymer solution temperature of 190°C and an average cooling fluid temperature of 130°C, the log mean temperature difference for this exchanger is 60°C, and the designed exchanger will be able to remove the heat of polymerization.

The total flow through each conduit is approximately 44 kilograms/hr at an average viscosity of 6300 cP. Using standard pressure drop (Bernoulli) calculations, the pressure drop is calculated as 3.66 kgf/cm² through the exchanger.

### Definitions

By "substantially uniform," as used with respect to a dimension (such as width or height) or a cross-sectional area of zone within a channel, is meant that the same is either not converging nor diverging at all, or is converging and/or diverging by no more than ten percent of the average of that dimension.

"Polymer" refers to a compound prepared by polymerizing monomers, whether of the same or a different type of monomer. The generic term "polymer" embraces the terms "oligomer," "homopolymer," "copolymer," "terpolymer" as well as "interpolymer."

"Interpolymer" refers to polymers prepared by the polymerization of at least two different types of monomers. The generic term "interpolymer" includes the term "copolymer" (which is usually employed to refer to a polymer prepared from two different monomers) as well as the term "terpolymer" (which is usually employed to refer to a polymer prepared from three different types of monomers). It also encompasses polymers made by polymerizing four or more types of monomers.

"Oligomer" refers to a polymer molecule consisting of only a few monomer units, such as a dimer, trimer, or tetramer.

"Bubble point pressure" means the highest pressure at which the first bubble of vapor is formed at a given temperature.

"Polymer solution" means a solution containing a dissolved polymer where the polymer and the volatiles are in a single phase - a liquid phase.

"Fluid" means a fluid useful to convey heat from a source, and transfer that heat by indirect heat exchange to a plate of the apparatus. Suitable thermal-fluids include steam, hot oils, and other thermal-fluids, such as those marketed by The Dow Chemical Company under the trademark "DOWTHERM^{™}."

Solution viscosities are measured using an Anton Paar MCR 102 rheometer made by Anton Paar Germany GmbH. The rheometer is equipped with a C-ETD300 electrical system. The cup-and-bob system (combination of concentric cylinders) comprises a 27 millimeter (mm) diameter cup and a 25 mm diameter bob to allow for 1 mm gap between the two. The bob is operated in rotational mode inside a 150 bar (approximately 153 kgf/cm²) pressure cell. Viscosity measurements are obtained at a pressure of 30 bar (approximately 31 kgf/cm² - obtained with a nitrogen atmosphere), a range of temperatures (150 to 250°C), a range of polymer concentrations (20 to 90 weight percent), a range of shear rates (0.1 to >100 reciprocal seconds (s⁻¹)), and range of polymer molecular weights (15,000 to 200,000 g/mole). The solvent in all cases is Isopar^{™} E by ExxonMobil. The viscosity measurements obtained range from 800 to greater than 2,000,000 centipoise.

While the invention has been described with reference to some embodiments, it will be understood by those skilled in the art that various changes may be made and equivalents may be substituted for elements thereof without departing from the scope of the invention. In addition, many modifications may be made to adapt a particular situation or material to the teachings of the invention without departing from essential scope thereof. Therefore, it is intended that the invention not be limited to the particular embodiments disclosed as the best mode contemplated for carrying out this invention, but that the invention will include all embodiments falling within the scope of the appended claims.

## Claims

1. An apparatus (100) for heating or cooling a polymer solution (200, 500), comprising:
a shell (102); the shell (102) having an inlet port (120) for introducing a polymer solution (200, 500) into the shell (102) and an outlet port (130) for removing the polymer solution (200) from the shell (102); where the shell (102) does not contain any other ports other than the inlet port (120) located at a top of the shell (102) and the outlet port (130) located at a bottom of the shell (102); or where the shell (102) does not contain any other ports other than the inlet port (120) located at the bottom of the shell (102) and the outlet port (130) located at the top of the shell (102); wherein the polymer solution (200, 500) comprises a polymer and a solvent that is operative to dissolve the polymer; and
a plurality of plates (104) in the shell (102); where the plurality of plates (104) is stacked one atop the other to define a central passage that is in fluid communication with the inlet port (120) of the shell (102); where the plurality of plates (104) further defines a plurality of conduits, each conduit extending radially outwards from the central passage, where the plurality of conduits is in fluid communication with the central passage; and where the apparatus (100) is operated at a pressure and a temperature effective to maintain the polymer solution (200, 500) in a single phase during its travel through the apparatus (100) from the inlet port (120) of the shell (102) to an outlet port (130) of the shell (102); where each conduit never decreases in width from an inner circumference to an outer circumference.

2. The apparatus (100) of Claim 1, wherein the polymer solution (200, 500) is heated, cooled, or maintained at a constant temperature from inlet port (120) to outlet port (130).

3. The apparatus (100) of Claim 1, where the polymer solution (200, 500) travels from the inlet port (120) of the shell (102) to the central passage, from the central port through the plurality of conduits and then to the outlet port (130) of the shell (102).

4. The apparatus (100) of Claim 1, where the polymer solution (200, 500) travels from the inlet port (120) of the shell (102) to a periphery of the shell (102), from the periphery of the shell (102) through the plurality of conduits to the center of the shell (102) and then to the outlet port (130) of the shell (102).

5. The apparatus (100) of Claim 1, where a temperature of the polymer solution (200, 500) at the inlet port (120) is 120°C to 230°C and a pressure of the polymer solution at the inlet port (120) is 35 to 250 kilogram-force per square centimeter.

6. The apparatus (100) of Claim 1, where a temperature of the polymer solution (200, 500) at the outlet port (130) is 200°C to 300°C and a pressure of the polymer solution (200, 500) at the outlet port (130) is 20 to 200 kilogram-force per square centimeter.

7. The apparatus (100) of Claim 1, where the polymer solution (200, 500) has a solution viscosity of 100 to 2,000,000 centipoise at the shear rate under which the apparatus (100) operates.

8. The apparatus (100) of Claim 1, where each conduit has a varying width over its entire length.

9. The apparatus (100) of Claim 1, where each conduit has a constant width over its entire length.

10. The apparatus (100) of Claim 1, where each conduit has an increasing width over a portion of its entire length and has a decreasing width over a portion of its entire length.

11. The apparatus (100) of Claim 1, where each conduit is in fluid communication with a wall (108) that contains tubes (140) through which a heat transfer fluid (150) is transported.

12. The apparatus (100) of Claim 1, where the polymer solution (200, 500) leaves the outlet port (130) at a temperature that is lower than a temperature at the inlet port (120).

13. The apparatus (100) of Claim 1, where the polymer solution (200, 500) leaves the outlet port (130) at a temperature that is higher than a temperature at the inlet port (120).

14. The apparatus (400) of any one of Claims 1 through 13, further comprising:
a pump (402) in fluid communication with the apparatus (400); where the pump (402) is disposed upstream of the apparatus (400) and is operative to pump the polymer solution (200, 500) to the apparatus (400); and
a pressure regulation device (406); where the pressure regulation device (406) is disposed downstream of the apparatus (400) and is operative to keep the solution in a single-phase and to then reduce a pressure of the polymer solution (200, 500) to facilitate a conversion of the polymer solution (200, 500) from a single phase to multiple phases; where the apparatus (400) is operative to devolatilize the polymer solution (200, 500) or to promote a reaction in the polymer solution (200, 500).

15. A method comprising:
discharging a polymer solution (200, 500) in a single phase to an apparatus (100) comprising:
a shell (102); the shell (102) having an inlet port (120) for introducing a polymer solution (200, 500) into the shell (102) and an outlet port (130) for removing the polymer solution (200, 500) from the shell (102); where the shell (102) does not contain any other ports other than the inlet port (120) located at a top of the shell (102) and the outlet port (130) located at a bottom of the shell (102); or where the shell (102) does not contain any other ports other than the inlet port (120) located at the bottom of the shell (102) and the outlet port (130) located at the top of the shell (102);
a plurality of plates (104) in the shell (102); where the plurality of plates (104) is stacked one atop the other to define a central passage that is in fluid communication with the inlet port (120) to the shell (102); where the plurality of plates (104) further defines a plurality of conduits, each conduit extending radially outwards from the central passage, where the plurality of conduits is in fluid communication with the central passage; where each conduit never decreases in width from an inner circumference to an outer circumference;
operating the apparatus (100) at a pressure and a temperature effective to maintain the polymer solution (200, 500) in a single phase during its travel through the apparatus (100) from the inlet port (120) to the outlet port of (130) the shell (102); and
removing from the outlet port (130) of the apparatus (100) the polymer solution (200, 500) in the single phase; the polymer solution (200, 500) at the outlet port (130) being at a lower temperature, a higher temperature, or having a same temperature as a temperature of the polymer solution (200, 500) at the inlet port (120).

## Patentansprüche

1. Einrichtung (100) zum Erhitzen oder Kühlen einer Polymerlösung (200, 500), umfassend:
einen Mantel (102); wobei der Mantel (102) eine Einlassöffnung (120) zum Einführen einer Polymerlösung (200, 500) in den Mantel (102) und eine Auslassöffnung (130) zum Entfernen der Polymerlösung (200) aus dem Mantel (102) aufweist; wobei der Mantel (102) keine anderen Öffnungen als die Einlassöffnung (120), die sich an einer Oberseite des Mantels (102) befindet, und die Auslassöffnung (130) enthält, die sich an einer Unterseite des Mantels (102) befindet; oder wobei der Mantel (102) keine anderen Öffnungen als die Einlassöffnung (120), die sich an der Unterseite des Mantels (102) befindet, und die Auslassöffnung (130) enthält, die sich an der Oberseite des Mantels (102) befindet; wobei die Polymerlösung (200, 500) ein Polymer und ein Lösungsmittel umfasst, das betriebsfähig ist, um das Polymer aufzulösen; und
eine Vielzahl von Platten (104) in dem Mantel (102); wobei die Vielzahl von Platten (104) übereinander gestapelt ist, um einen zentralen Durchgang zu definieren, der in Fluidverbindung mit der Einlassöffnung (120) des Mantels (102) steht; wobei die Vielzahl von Platten (104) ferner eine Vielzahl von Leitungen definiert, wobei sich jede Leitung radial nach außen von dem zentralen Durchgang erstreckt, wobei die Vielzahl von Leitungen in Fluidverbindung mit dem zentralen Durchgang steht; und wobei die Einrichtung (100) bei einem Druck und einer Temperatur betrieben wird, die wirksam sind, um die Polymerlösung (200, 500) während ihres Weges durch die Einrichtung (100) hindurch von der Einlassöffnung (120) des Mantels (102) zu einer Auslassöffnung (130) des Mantels (102) in einer einzigen Phase zu halten; wobei eine Breite jeder Leitung von einem inneren Umfang zu einem äußeren Umfang niemals abnimmt.

2. Einrichtung (100) nach Anspruch 1, wobei die Polymerlösung (200, 500) von dem Einlassanschluss (120) zu dem Auslassanschluss (130) erwärmt, gekühlt oder auf einer konstanten Temperatur gehalten wird.

3. Einrichtung (100) nach Anspruch 1, wobei sich die Polymerlösung (200, 500) von der Einlassöffnung (120) des Mantels (102) zu dem zentralen Durchgang, von der zentralen Öffnung durch die Vielzahl von Leitungen hindurch und dann zu der Auslassöffnung (130) des Mantels (102) bewegt.

4. Einrichtung (100) nach Anspruch 1, wobei sich die Polymerlösung (200, 500) von der Einlassöffnung (120) des Mantels (102) zu einem Rand des Mantels (102), von dem Rand des Mantels (102) durch die Vielzahl von Leitungen hindurch zu der Mitte des Mantels (102) und dann zu der Auslassöffnung (130) des Mantels (102) bewegt.

5. Einrichtung (100) nach Anspruch 1, wobei eine Temperatur der Polymerlösung (200, 500) an der Einlassöffnung (120) 120 °C bis 230 °C beträgt und ein Druck der Polymerlösung an der Einlassöffnung (120) 35 bis 250 Kilogramm-Kraft pro Quadratzentimeter beträgt.

6. Einrichtung (100) nach Anspruch 1, wobei eine Temperatur der Polymerlösung (200, 500) an der Auslassöffnung (130) 200 °C bis 300 °C beträgt und ein Druck der Polymerlösung (200, 500) an der Auslassöffnung (130) 20 bis 200 Kilogramm-Kraft pro Quadratzentimeter beträgt.

7. Einrichtung (100) nach Anspruch 1, wobei die Polymerlösung (200, 500) bei der Schergeschwindigkeit, unter der die Einrichtung (100) betrieben wird, eine Lösungsviskosität von 100 bis 2.000.000 Centipoise aufweist.

8. Einrichtung (100) nach Anspruch 1, wobei jede Leitung über ihre gesamte Länge eine variierende Breite aufweist.

9. Einrichtung (100) nach Anspruch 1, wobei jede Leitung über ihre gesamte Länge eine konstante Breite aufweist.

10. Einrichtung (100) nach Anspruch 1, wobei jede Leitung über einen Abschnitt ihrer gesamten Länge eine zunehmende Breite aufweist und über einen Abschnitt ihrer gesamten Länge eine abnehmende Breite aufweist.

11. Einrichtung (100) nach Anspruch 1, wobei jede Leitung in Fluidverbindung mit einer Wand (108) steht, die Rohre (140) enthält, durch die hindurch ein Wärmeübertragungsfluid (150) transportiert wird.

12. Einrichtung (100) nach Anspruch 1, wobei die Polymerlösung (200, 500) die Auslassöffnung (130) bei einer Temperatur verlässt, die niedriger als die Temperatur an der Einlassöffnung (120) ist.

13. Einrichtung (100) nach Anspruch 1, wobei die Polymerlösung (200, 500) die Auslassöffnung (130) bei einer Temperatur verlässt, die höher als die Temperatur an der Einlassöffnung (120) ist.

14. Einrichtung (400) nach einem der Ansprüche 1 bis einschließlich 13, ferner umfassend:
eine Pumpe (402) in Fluidverbindung mit der Einrichtung (400); wobei die Pumpe (402) stromaufwärts der Einrichtung (400) angeordnet ist und betriebsfähig ist, um die Polymerlösung (200, 500) zu der Einrichtung (400) zu pumpen; und
eine Druckregulierungsvorrichtung (406); wobei die Druckregulierungsvorrichtung (406) stromabwärts der Einrichtung (400) angeordnet ist und betriebsfähig ist, um die Lösung in einer einzigen Phase zu halten und dann einen Druck der Polymerlösung (200, 500) zu reduzieren, um eine Umwandlung der Polymerlösung (200, 500) von einer einzigen Phase in mehrere Phasen zu erleichtern; wobei die Einrichtung (400) betriebsfähig ist, um die Polymerlösung (200, 500) zu entgasen oder um eine Reaktion in der Polymerlösung (200, 500) zu fördern.

15. Verfahren, umfassend:
Abgeben einer Polymerlösung (200, 500) in einer einzigen Phase an eine Einrichtung (100), umfassend:
einen Mantel (102); wobei der Mantel (102) eine Einlassöffnung (120) zum Einführen einer Polymerlösung (200, 500) in den Mantel (102) und eine Auslassöffnung (130) zum Entfernen der Polymerlösung (200, 500) aus dem Mantel (102) aufweist; wobei der Mantel (102) keine anderen Öffnungen als die Einlassöffnung (120), die sich an einer Oberseite des Mantels (102) befindet, und die Auslassöffnung (130) enthält, die sich an einer Unterseite des Mantels (102) befindet; oder wobei der Mantel (102) keine anderen Öffnungen als die Einlassöffnung (120), die sich an der Unterseite des Mantels (102) befindet, und die Auslassöffnung (130) enthält, die sich an der Oberseite des Mantels (102) befindet;
eine Vielzahl von Platten (104) in dem Mantel (102); wobei die Vielzahl von Platten (104) übereinander gestapelt ist, um einen zentralen Durchgang zu definieren, der in Fluidverbindung mit der Einlassöffnung (120) zu dem Mantel (102) steht; wobei die Vielzahl von Platten (104) ferner eine Vielzahl von Leitungen definiert, wobei sich jede Leitung radial nach außen von dem zentralen Durchgang erstreckt, wobei die Vielzahl von Leitungen in Fluidverbindung mit dem zentralen Durchgang steht; wobei die Breite jeder Leitung von einem inneren Umfang zu einem äußeren Umfang niemals abnimmt;
Betreiben der Einrichtung (100) bei einem Druck und einer Temperatur, die wirksam sind, um die Polymerlösung (200, 500) während ihres Wegs durch die Einrichtung (100) hindurch von der Einlassöffnung (120) zu der Auslassöffnung (130) des Mantels (102) in einer einzigen Phase zu halten; und
Entfernen der Polymerlösung (200, 500) in der einzelnen Phase aus der Auslassöffnung (130) der Einrichtung (100); wobei die Polymerlösung (200, 500) an der Auslassöffnung (130) eine niedrigere Temperatur, eine höhere Temperatur ist oder eine gleiche Temperatur wie eine Temperatur der Polymerlösung (200, 500) an der Einlassöffnung (120) aufweist.

## Revendications

1. Appareil (100) permettant de chauffer ou de refroidir une solution de polymère (200, 500), comprenant :
une coque (102) ; la coque (102) ayant un orifice d'entrée (120) permettant d'introduire une solution de polymère (200, 500) dans la coque (102) et un orifice de sortie (130) permettant de retirer la solution de polymère (200) de la coque (102) ; où la coque (102) ne contient pas d'autres orifices quelconques autres que l'orifice d'entrée (120) situé au niveau d'une partie supérieure de la coque (102) et l'orifice de sortie (130) situé au niveau d'une partie inférieure de la coque (102) ; ou lorsque la coque (102) ne contient pas d'autres orifices quelconques autres que l'orifice d'entrée (120) situé au niveau de la partie inférieure de la coque (102) et l'orifice de sortie (130) situé au niveau de la partie supérieure de la coque (102) ; dans lequel la solution de polymère (200, 500) comprend un polymère et un solvant qui a pour fonction de dissoudre le polymère ; et
une pluralité de plaques (104) dans la coque (102) ; où la pluralité de plaques (104) sont empilées les unes sur les autres pour définir un passage central qui est en communication fluidique avec l'orifice d'entrée (120) de la coque (102) ; où la pluralité de plaques (104) définit en outre une pluralité de conduits, chaque conduit s'étendant radialement vers l'extérieur depuis le passage central, où la pluralité de conduits est en communication fluidique avec le passage central ; et où l'appareil (100) fonctionne à une pression et à une température efficaces pour maintenir la solution de polymère (200, 500) en une seule phase pendant son parcours dans l'appareil (100) depuis l'orifice d'entrée (120) de la coque (102) jusqu'à l'orifice de sortie (130) de la coque (102) ; où chaque conduit ne diminue jamais en largeur d'une circonférence interne à une circonférence externe.

2. Appareil (100) selon la revendication 1, dans lequel la solution de polymère (200, 500) est chauffée, refroidie ou maintenue à une température constante depuis l'orifice d'entrée (120) jusqu'à l'orifice de sortie (130).

3. Appareil (100) selon la revendication 1, où la solution de polymère (200, 500) se déplace depuis l'orifice d'entrée (120) de la coque (102) vers le passage central, depuis l'orifice central à travers la pluralité de conduits et ensuite vers l'orifice de sortie (130) de la coque (102).

4. Appareil (100) selon la revendication 1, où la solution de polymère (200, 500) se déplace depuis l'orifice d'entrée (120) de la coque (102) vers une périphérie de la coque (102), depuis la périphérie de la coque (102) à travers la pluralité de conduits vers le centre de la coque (102) et ensuite vers l'orifice de sortie (130) de la coque (102).

5. Appareil (100) selon la revendication 1, où une température de la solution de polymère (200, 500) au niveau de l'orifice d'entrée (120) est de 120 °C à 230 °C et une pression de la solution de polymère au niveau de l'orifice d'entrée (120) est de 35 à 250 kilogrammes-force par centimètre carré.

6. Appareil (100) selon la revendication 1, où une température de la solution de polymère (200, 500) au niveau de l'orifice de sortie (130) est de 200 °C à 300 °C et une pression de la solution de polymère (200, 500) au niveau de l'orifice de sortie (130) est de 20 à 200 kilogrammes-force par centimètre carré.

7. Appareil (100) selon la revendication 1, où la solution de polymère (200, 500) a une viscosité de solution de 100 à 2 000 000 centipoises au taux de cisaillement auquel l'appareil (100) fonctionne.

8. Appareil (100) selon la revendication 1, où chaque conduit a une largeur variable sur toute sa longueur.

9. Appareil (100) selon la revendication 1, où chaque conduit a une largeur constante sur toute sa longueur.

10. Appareil (100) selon la revendication 1, où chaque conduit a une largeur qui augmente sur une partie de toute sa longueur et a une largeur qui diminue sur une partie de toute sa longueur.

11. Appareil (100) selon la revendication 1, où chaque conduit est en communication fluidique avec une paroi (108) qui contient des tubes (140) à travers lesquels un fluide de transfert de chaleur (150) est transporté.

12. Appareil (100) selon la revendication 1, où la solution de polymère (200, 500) quitte l'orifice de sortie (130) à une température qui est inférieure à une température de l'orifice d'entrée (120).

13. Appareil (100) selon la revendication 1, où la solution de polymère (200, 500) quitte l'orifice de sortie (130) à une température qui est supérieure à une température de l'orifice d'entrée (120).

14. Appareil (400) selon l'une quelconque des revendications 1 à 13, comprenant en outre :
une pompe (402) en communication fluidique avec l'appareil (400) ; où la pompe (402) est disposée en amont de l'appareil (400) et a pour fonction de pomper la solution de polymère (200, 500) vers l'appareil (400) ; et
un dispositif de régulation de pression (406) ; où le dispositif de régulation de pression (406) est disposé en aval de l'appareil (400) et a pour fonction de maintenir la solution dans une phase unique et de réduire ensuite une pression de la solution de polymère (200, 500) pour faciliter une conversion de la solution de polymère (200, 500) d'une phase unique à des phases multiples ; où l'appareil (400) a pour fonction de dévolatiliser la solution de polymère (200, 500) ou de favoriser une réaction dans la solution de polymère (200, 500).

15. Procédé comprenant :
la décharge d'une solution de polymère (200, 500) en une seule phase dans un appareil (100) comprenant :
une coque (102) ; la coque (102) ayant un orifice d'entrée (120) permettant d'introduire une solution de polymère (200, 500) dans la coque (102) et un orifice de sortie (130) permettant de retirer la solution de polymère (200, 500) de la coque (102) ; où la coque (102) ne contient pas d'autres orifices quelconques autres que l'orifice d'entrée (120) situé au niveau d'une partie supérieure de la coque (102) et l'orifice de sortie (130) situé au niveau d'une partie inférieure de la coque (102) ; ou lorsque la coque (102) ne contient pas d'autres orifices quelconques autres que l'orifice d'entrée (120) situé au niveau de la partie inférieure de la coque (102) et l'orifice de sortie (130) situé au niveau de la partie supérieure de la coque (102) ;
une pluralité de plaques (104) dans la coque (102) ; où la pluralité de plaques (104) sont empilées les unes sur les autres pour définir un passage central qui est en communication fluidique avec l'orifice d'entrée (120) de la coque (102) ; où la pluralité de plaques (104) définit en outre une pluralité de conduits, chaque conduit s'étendant radialement vers l'extérieur depuis le passage central, où la pluralité de conduits est en communication fluidique avec le passage central ; où chaque conduit ne diminue jamais en largeur d'une circonférence interne à une circonférence externe ;
le fonctionnement de l'appareil (100) à une pression et à une température permettant de maintenir la solution de polymère (200, 500) en une seule phase pendant son passage dans l'appareil (100), depuis l'orifice d'entrée (120) jusqu'à l'orifice de sortie (130) de la coque (102) ; et
le retrait depuis l'orifice de sortie (130) de l'appareil (100) de la solution de polymère (200, 500) en phase unique ; la solution de polymère (200, 500) au niveau de l'orifice de sortie (130) étant à une température inférieure, une température supérieure ou une température identique à une température de la solution de polymère (200, 500) au niveau de l'orifice d'entrée (120).
